# EUROPÄISCHE PATENTSCHRIFT

(11) **EP 3 036 491 B1**
(45) Veröffentlichungstag und Bekanntmachung des Hinweises auf die Patenterteilung: **04.11.2020**
(21) Anmeldenummer: 14750512.7
(22) Anmeldetag: 13.08.2014
(51) Int. Cl.: F25D 29/00

(54) **KÄLTEGERÄT MIT EINEM KAMERAMODUL**
REFRIGERATING DEVICE WITH A CAMERA MODULE
APPAREIL FRIGORIQUE MUNI D'UN MODULE CAMÉRA

(30) Priorität: 23.08.2013 DE 102013216762
(43) Veröffentlichungstag der Anmeldung: 29.06.2016
(73) Patentinhaber: BSH Hausgeräte GmbH, 81739 München (DE)
(72) Erfinder: GRIMMINGER, Jochen, 86660 Tapfheim (DE); KEMPFLE, Stephan, 89352 Ellzee (DE); WERNER, Hans Peter, 89537 Giengen (DE); WETZL, Gerhard, 89567 Sontheim (DE)
(86) Internationale Anmeldenummer: PCT/EP2014/067366
(87) Internationale Veröffentlichungsnummer: WO 2015/024841

(56) Entgegenhaltungen:
- JP-A- 2004 183 987
- US-A1- 2012 138 629
- US-B1- 6 954 290

## Beschreibung

Die vorliegende Erfindung betrifft ein Kältegerät mit einem Kameramodul zum Aufnehmen eines ersten digitalen Bildes mit Markierungen im Inneren eines Innenbehälters.

Die Offenlegungsschrift JP 2004 183 987 A zeigt ein Kältegerät mit einer Kamera.

Die Offenlegungsschrift US 2012/138629 A1 zeigt ein Kältegerät umfassend eine Kamera.

Es ist die der Erfindung zugrundeliegende Aufgabe, ein Kältegerät anzugeben, bei dem Bildaufnahmen aus unterschiedlichen Blickwinkeln miteinander verglichen werden können.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird diese Aufgabe durch ein Kältegerät mit einem Kameramodul zum Aufnehmen eines ersten digitalen Bildes mit Markierungen im Inneren des Kältegerätes gelöst, bei dem das Kältegerät eine Verarbeitungseinrichtung umfasst, die ausgebildet ist, das erste digitale Bild auf Grundlage der aufgenommenen Markierungen in ein zweites digitales Bild umzuformen. Dadurch wird beispielsweise der technische Vorteil erreicht, dass die Markierungen einen gleichbleibenden Bildbereich im Inneren des Innenbehälters definieren, auch wenn die Aufnahmen unter unterschiedlichen Winkeln erfolgen. Dadurch kann ein einheitlicher Bildbereich im Inneren des Innenbehälters definiert werden, so dass die unter unterschiedlichen Winkeln aufgenommenen Bildbereiche anschließend verglichen werden können.

Unter einem Kältegerät wird insbesondere ein Haushaltskältegerät verstanden, also ein Kältegerät, das zur Haushaltsführung in Haushalten oder im Gastronomiebereich eingesetzt wird, und insbesondere dazu dient Lebensmittel und/oder Getränke bei bestimmten Temperaturen zu lagern, wie beispielsweise ein Kühlschrank, ein Gefrierschrank, eine Kühlgefrierkombination, eine Gefriertruhe oder ein Weinkühlschrank.

In einer vorteilhaften Ausführungsform des Kältegerätes sind die Markierungen durch Vorsprünge mit geometrischen Formen im Inneren eines Innenbehälters des Kältegerätes gebildet. Dadurch wird beispielsweise der technische Vorteil erreicht, dass die Markierungen in der Aufnahme des ersten digitalen Bildes auf einfache Weise identifiziert werden können. In einer weiteren vorteilhaften Ausführungsform des Kältegerätes sind die Markierungen durch Kanten im Inneren des Innenbehälters gebildet. Dadurch wird beispielsweise der technische Vorteil erreicht, dass die Markierungen auf einfache Weise in den Innenbehälter integriert werden können.

In einer weiteren vorteilhaften Ausführungsform des Kältegerätes weisen die Markierungen eine andere Farbe als der Innenbehälter des Kältegerätes auf. Dadurch wird beispielsweise ebenfalls der technische Vorteil erreicht, dass die Markierungen in der Aufnahme des ersten digitalen Bildes auf einfache Weise identifiziert werden können.

In einer weiteren vorteilhaften Ausführungsform des Kältegerätes umfasst der Innenbehälter des Kältegeräts vier Markierungen, die einen rechteckigen Bereich im Inneren des Innenbehälters definieren. Dadurch wird beispielsweise der technische Vorteil erreicht, dass ein rechteckiger Bereich im Inneren des Innenbehälters verglichen werden kann.

In einer weiteren vorteilhaften Ausführungsform des Kältegerätes sind die Markierungen dreiecksförmig. Dadurch wird beispielsweise der technische Vorteil erreicht, dass die Genauigkeit einer Bildanalyse durch die Ecken der Dreiecke erhöht wird.

In einer weiteren vorteilhaften Ausführungsform des Kältegerätes sind die Markierungen Retroreflektoren. Dadurch wird beispielsweise der technische Vorteil erreicht, dass die Markierungen in der Aufnahme des ersten digitalen Bildes auf besonders einfache Weise identifiziert werden können.

In einer weiteren vorteilhaften Ausführungsform des Kältegerätes umfasst das Kältegerät eine Beleuchtungseinrichtung, die in der Nähe des Kameramoduls angeordnet ist. Dadurch wird beispielsweise der technische Vorteil erreicht, dass die Retroreflektoren das Licht in das Kameramodul werfen.

In einer weiteren vorteilhaften Ausführungsform des Kältegerätes umfasst die Beleuchtungseinrichtung ein Blitzgerät. Dadurch wird beispielsweise der technische Vorteil erreicht, dass der Kontrast und die Helligkeit der Aufnahme verbessert wird.

Erfindungsgemäß ist die Verarbeitungseinrichtung ausgebildet, einen Randbereich des ersten digitalen Bildes auf Grundlage der Markierungen zu entfernen, um das zweite digitale Bild zu erhalten. Dadurch wird beispielsweise der technische Vorteil erreicht, dass ein gleichbleibender Bildausschnitt erhalten wird.

In einer weiteren vorteilhaften Ausführungsform des Kältegerätes ist die Verarbeitungseinrichtung ausgebildet, eine Bildgröße des ersten digitalen Bildes auf Grundlage der Markierungen zu ändern, um das zweite digitale Bild zu erhalten. Dadurch wird beispielsweise der technische Vorteil erreicht, dass die Bilder übereinander gelegt werden können, um die Aufnahmen aus unterschiedlichen Winkeln zu vergleichen.

In einer weiteren vorteilhaften Ausführungsform des Kältegerätes ist die Verarbeitungseinrichtung ausgebildet, eine Bildauflösung des ersten digitalen Bildes auf Grundlage der Markierungen anzupassen, um das zweite digitale Bild zu erhalten. Dadurch wird beispielsweise der technische Vorteil erreicht, dass die Auflösung der Aufnahmen vereinheitlicht werden kann.

In einer weiteren vorteilhaften Ausführungsform des Kältegerätes ist die Verarbeitungseinrichtung ausgebildet, einen Bildausschnitt des ersten digitalen Bildes auf Grundlage der Markierungen zu wählen, um das zweite digitale Bild zu erhalten. Dadurch wird beispielsweise der technische Vorteil erreicht, dass ein gleichbleibender Bildausschnitt erhalten werden kann.

In einer weiteren vorteilhaften Ausführungsform des Kältegerätes ist die Verarbeitungseinrichtung ausgebildet, eine Bilddrehung des ersten digitalen Bildes auf Grundlage der Markierungen durchzuführen, um das zweite digitale Bild zu erhalten. Dadurch wird beispielsweise der technische Vorteil erreicht, dass eine Drehung des Kameramoduls kompensiert werden kann.

In einer weiteren vorteilhaften Ausführungsform des Kältegerätes ist die Verarbeitungseinrichtung ausgebildet, einen Trapezfilter oder einen Verzerrungsfilter auf Grundlage der Markierungen anzuwenden. Dadurch wird beispielsweise ebenfalls der technische Vorteil erreicht, dass eine Drehung des Kameramoduls kompensiert werden kann.

Ausführungsbeispiele der Erfindung sind in den Zeichnungen dargestellt und werden im Folgenden näher beschrieben.

Es zeigen:
- Fig. 1: eine schematische Ansicht eines Kältegerätes;
- Fig. 2: eine Innenansicht einer Kältegerätetür mit Kameramodul;
- Fig. 3: eine Frontalansicht der Innenseite des Innenbehälters mit Markierungen;
- Fig. 4: eine Querschnittsansicht durch das Kältegerät; und
- Fig. 5: eine weitere Frontalansicht des Innenbehälters.

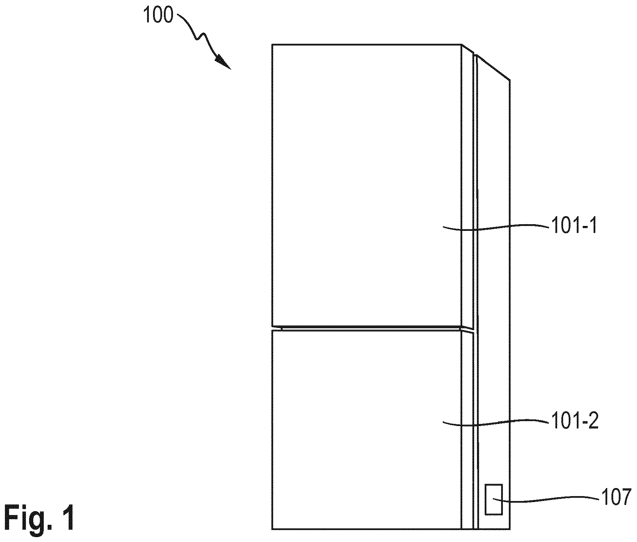

Fig. 1 zeigt einen Kühlschrank mit einer oberen Kältegerätetür 101-1 und einer unteren Kältegerätetür 101-2 stellvertretend für ein allgemeines Kältegerät 100. Der Kühlschrank dient beispielsweise zur Kühlung von Lebensmitteln und umfasst einen Kältemittelkreislauf mit einem Verdampfer, einem Verdichter, einem Verflüssiger und einem Drosselorgan. Der Verdampfer ist ein Wärmeaustauscher, in dem nach der Expansion das flüssige Kältemittel durch Wärmeaufnahme von dem zu kühlenden Medium, d.h. der Luft im Inneren des Kühlschranks, verdampft wird.

Der Verdichter ist ein mechanisch betriebenes Bauteil, das Kältemitteldampf vom Verdampfer absaugt und bei einem höheren Druck zum Verflüssiger ausstößt. Der Verflüssiger ist ein Wärmeaustauscher, in dem nach der Kompression das verdampfte Kältemittel durch Wärmeabgabe an ein äußeres Kühlmedium, d.h. die Umgebungsluft, verflüssigt wird. Das Drosselorgan ist eine Vorrichtung zur ständigen Verminderung des Druckes durch Querschnittsverengung.

Das Kältemittel ist ein Fluid, das für die Wärmeübertragung in dem kälteerzeugenden System verwendet wird, das bei niedrigen Temperaturen und niedrigem Druck des Fluids Wärme aufnimmt und bei höherer Temperatur und höherem Druck des Fluids Wärme abgibt, wobei üblicherweise Zustandsänderungen des Fluids inbegriffen sind.

Das Kältegerät 100 umfasst eine Verarbeitungseinrichtung 107, die in der Lage ist, Daten des Kältegerätes elektronisch zu verarbeiten. Die Verarbeitungseinrichtung 107 ist beispielsweise eine elektrische Schaltung mit einem Prozessor und einem Speicher.

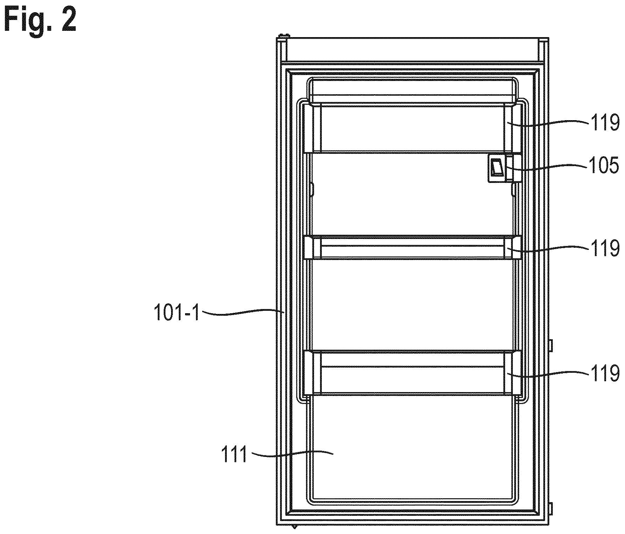

Fig. 2 zeigt eine Innenansicht einer Kältegerätetür 101-1 mit einem Kameramodul 105. Das Kameramodul 105 ist ein digitales Bildaufnahmemodul, das in der Lage ist, den Innenraum eines Innenbehälters oder die Kältegerätetür 101-1 aufzunehmen und bildmäßig zu erfassen, wie beispielsweise eine Windows Web-Cam. Das Kameramodul 105 umfasst beispielsweise eine Standardlinse, die mittels Verschraubung austauschbar ist. Das Kameramodul 105 wird über eine elektrische Auslöseleitung ausgelöst, so dass die Aufnahme zu dem Auslösezeitpunkt eingeleitet wird. Beim Öffnen und Schließen der Kältegerätetür 101-1 macht das Kameramodul 105 Aufnahmen von dem Innenbehälter aus unterschiedlichen Winkeln.

Das Kameramodul 105 ist unterhalb des oberen Türabstellers 119 angeordnet. Die mechanische Positionierung des Kameramoduls 105 in der Kältegerätetür 101-1 ist derart, dass die Aufnahmerichtung nicht durch in der Kältegerätetür 101-1 abgestellte Gegenstände verstellt wird. Die Aufnahmerichtung des Kameramoduls 105 ist gegenüber der Türinnenplatte 111 der Kältegerätetür 101-1 geneigt. Das Kameramodul 105 ist in der Kältegerätetür 101 in der Nähe der Vorderkante der Türabsteller 119 und an einer Außenkante eines Türholms der Kältegerätetür 101 angeordnet.

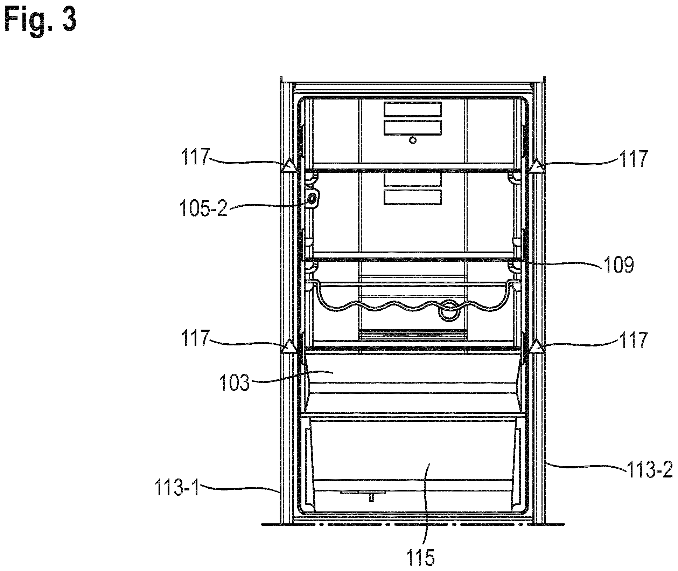

Fig. 3 zeigt eine Frontalansicht der Innenseite des Innenbehälters 103 mit Markierungen 117. In dem Innenbehälter 103 sind die Fachböden 109 angeordnet, die einen weiteren Abstellbereich für Kühlgut in der Kältegerätetür 101 bilden. Die Fachböden 109 bilden eine Deckplatte, einen Zwischenboden oder einen Teil einer Schublade und können als Ablageflächen für Kühlgut verwendet werden.

Der Innenbehälter 103 umfasst die Seitenwände 113-1 und 113-2. Die Kältegerätetür 101 wird an der Seitenwand 113-2 angeschlagen. Die Seitenwand 113-1 liegt der Seitenwand 113-2 mit der Kältegerätetür 101 gegenüber. Die Rückseite des Innenbehälters 103 wird von einer Rückwand 115 begrenzt.

Unterhalb des oberen Fachbodens 109 ist ein weiteres Kameramodul 105-2 angeordnet, das in der Lage ist, die Kältegerätetür 101 aufzunehmen. Die mechanische Positionierung des Kameramoduls 105 in dem Innenbehälter 103 ist derart, dass die Aufnahmerichtung nicht durch auf den Fachböden 109 abgestellte Gegenstände verstellt wird. Zudem ist die Anordnung und Gestaltung der Türabsteller 119 derart, dass ein Verstellen der Sichtlinie durch Kühlgut unmöglich ist.

Das Kameramodule 105 nehmen einen Innenraum des Kältegerätes 100 unter unterschiedlichen Blickwinkeln auf. Dabei kommt es je nach Blickwinkel zu einer unterschiedlichen Verzerrung des aufgenommenen Bildes. Um die Verzerrung zu kompensieren, ist die Verarbeitungseinrichtung 107 derart ausgebildet, dass in dem aufgenommenen Bild vorgegebene Markierungen 117 identifiziert werden, die sich im Inneren des Kältegerätes befinden. Bei der nachfolgenden Bildbearbeitung werden die Markierungen 117 dann beispielsweise dazu verwendet, das Bild auf den Bereich zuzuschneiden, der durch die Markierungen 117 definiert wird.

Die Markierungen 117 werden beispielsweise durch geometrische Formen im Inneren eines des Kältegerätes 100 gebildet, wie beispielsweise horizontal oder vertikal verlaufende Kanten oder aufgeklebte Dreiecke. Die Markierungen 117 können durch eine bestimmte Farbe hervorgehoben werden, so dass diese in der Aufnahme durch Farbanalyse auf einfache Weise identifiziert werden können. Durch die Markierungen 117 kann beispielsweise ein rechteckiger Bereich im Inneren des Innenbehälters 103 definiert werden, der sich in der Aufnahme des Kameramoduls 105 wiederfindet.

Die Markierungen 117 können zudem durch Retroreflektoren gebildet werden, die das auftreffende Licht in die gleiche Richtung zurückreflektieren. Umfasst das Kältegerät eine Beleuchtungseinrichtung, die in der Nähe des Kameramoduls 105 angeordnet ist, sind in der Aufnahme hell erscheinende Bereiche erkennbar, in denen die Markierungen 117 angeordnet sind. Die Beleuchtungseinrichtung umfasst beispielsweise ein Blitzgerät, so dass das Innere des Kältegerätes mit einer hohen Helligkeit aufgenommen werden kann.

Das Kameramodul 105 nimmt eine digitale Aufnahme im Innenraum des Kältegerätes 100 auf, in der die Markierungen 117 zu erkennen sind. Die Verarbeitungseinrichtung 107 analysiert das digitale Bild der Aufnahme und identifiziert die in diesem Bild abgebildeten Markierungen 117. Bei der nachfolgenden Bildverarbeitung ist die Verarbeitungsvorrichtung 107 in der Lage, einen Randbereich des digitalen Bildes auf Grundlage der Markierungen 117 zu entfernen, um ein weiteres digitales Bild zu erhalten. Die Verarbeitungseinrichtung 107 kann zudem eine Bildgröße des digitalen Bildes auf Grundlage der Markierungen 117 ändern oder eine Bildauflösung des digitalen Bildes auf Grundlage der Markierungen 117 anpassen, um ein weiteres digitales Bild zu erhalten. Die Verarbeitungseinrichtung 107 kann einen Bildausschnitt des digitalen Bildes auf Grundlage der Markierungen 117 wählen oder eine Bilddrehung des digitalen Bildes auf Grundlage der Markierungen 117 durchführen. Zudem kann auf das digitale Bild ein Trapezfilter oder ein Verzerrungsfilter auf Grundlage der Markierungen 117 angewendet werden.

Durch die Markierungen 117 und die Verarbeitungseinrichtung 107 lassen sich Aufnahmen des Kameramoduls 105 anpassen und entzerren, die unter verschiedenen Aufnahmewinkeln gewonnen worden sind. Insbesondere können unterschiedliche Kühlraumausschnitte bei unterschiedlichen Winkelgeschwindigkeiten der Kältegerätetür 101-1 kompensiert werden.

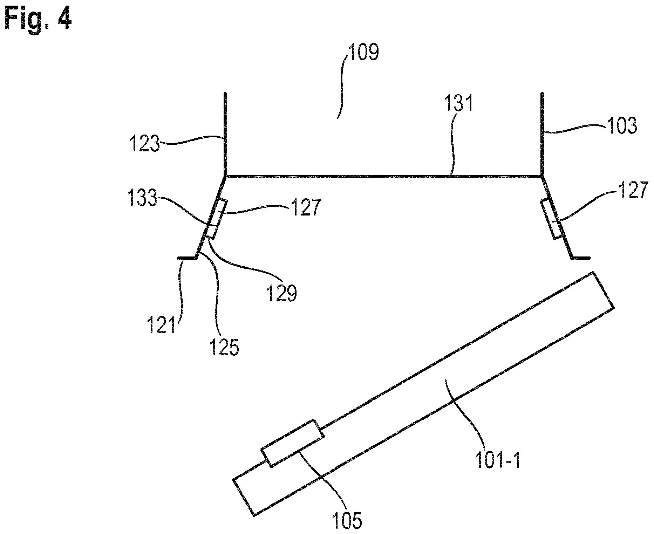

Fig. 4 zeigt eine Querschnittsansicht durch das Kältegerät 100. Der Innenbehälter 103 weist eine Vorderseite 121 auf, die einen Rand für eine Dichtung der Kältegerätetür 101-1 bildet. An die Vorderseite 121 schließt sich eine Schrägwand 125 des Innenbehälters 103 an, die eine Leuchte 127 umfasst. Die Schrägwand 125 verläuft schräg in das Innere des Innenbehälters 103. An die Schrägwand 125 schließt sich eine Seitenwand 123 des Innenbehälters 103 an. Im Inneren des Innenbehälters 103 ist der Fachboden 109 eingesetzt, der eine Vorderkante 131 aufweist. Der Fachboden 109 stützt sich an der Seitenwand 123 des Innenbehälters 103 ab.

Die Leuchte 127 in der Schrägwand 125 weist eine quadratische oder rechteckige Form auf. Die Leuchte 127 weist dadurch einen vertikalen Seitenrand 129 und einen horizontalen Seitenrand 133 auf. Der horizontale und der vertikale Seitenrand 133 und 129 der Leuchte 127 bilden Markierungslinien als Markierungen 117. Der beleuchtete horizontale und vertikale Seitenrand 133 und 129 der Leuchte 127 können von dem Kameramodul 105 auf einfache Weise aufgenommen werden und von der Verarbeitungseinrichtung 107 aufgrund des starken Kontrastes auf einfache Weise identifiziert werden. Dadurch können auf einfache Weise Referenzpunkte identifiziert werden.

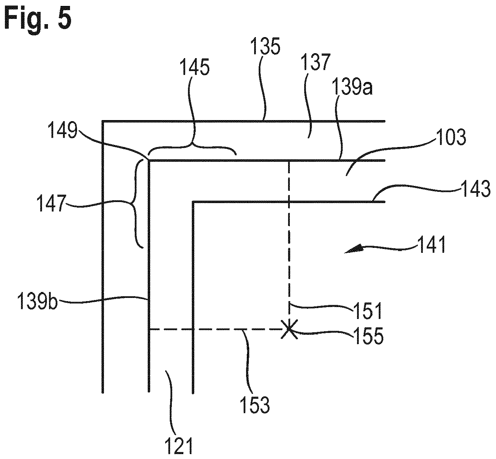

Fig. 5 zeigt eine weitere Frontalansicht eines Innenbehälters 103. Im Inneren des Innenbehälters 103 befindet sich der Lagerraum 141 für das Kühlgut, der von einer Innenwand 143 seitlich begrenzt wird.

Um den äußeren Innenbehälter 103 des Kältegerätes 100 herum ist ein Metallgehäuse mit einer Außenwand 135 und einem Vorderrand 137 gebildet. Der Vorderrand 137 ist flächenbündig zu der Vorderseite 121 des Innenbehälters 103 abgewinkelt. Der Vorderrand 137 der Außenwand 135 grenzt an den Innenbehälter 103 an. Der Übergang des metallischen Vorderrands 137 zum Innenbehälter 103 aus weißem Kunststoff bildet eine scharfe waagrechte Markierungslinie 139a und eine senkrechte Markierungslinie 139b, die von dem Kameramodul 105 auf einfache Weise erfasst werden können. Die Markierungslinien 139a und 139b können nicht durch Kühlgut verstellt werden.

Im oberen und seitlichen Eckbereich 145 und 147 bilden die Markierungslinien 139a und 139b einen rechten Winkel, der auf einfache Weise in der Aufnahme des Kameramoduls 105 identifiziert werden kann. Der Eckpunkt 149 des rechten Winkels bildet einen Referenzpunkt.

Durch den Eckpunkt 149 und die Markierungslinien 139a und 139b kann ein Koordinatensystem im Inneren des Innenbehälters 103 festgelegt werden. Der Abstand 151 bildet die kürzeste Linie zur oberen Markierungslinie 139a. Der Abstand 153 bildet die kürzeste Verbindung zur seitlichen Markierungslinie 139b. Durch die Abstände 151 und 153 lassen sich die Koordinaten des Beispielpunktes 155 im Innenraum des Innenbehälters 103 angeben. Die Abstände 151 und 153 können in Bildpixeln ausgedrückt werden.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Kältegerät
- 101-1: Kältegerätetür
- 101-1: Kältegerätetür
- 103: Innenbehälter
- 105: Kameramodul
- 107: Verarbeitungseinrichtung
- 109: Fachboden
- 111: Türinnenplatte
- 113-1: Seitenwand
- 113-2: Seitenwand
- 115: Rückwand
- 117: Markierungen
- 119: Türabsteller
- 121: Vorderseite
- 123: Seitenwand
- 125: Schrägwand
- 127: Leuchte
- 129: vertikaler Seitenrand
- 131: Vorderkante
- 133: horizontaler Seitenrand
- 135: Außenwand
- 137: Vorderrand
- 139a: Markierungslinie
- 139b: Markierungslinie
- 141: Lagerraum
- 143: Innenwand
- 145: Eckbereich
- 147: Eckbereich
- 149: Eckpunkt
- 151: Abstand
- 153: Abstand
- 155: Beispielpunkt

## Patentansprüche

1. Kältegerät (100) mit einem Kameramodul (105) zum Aufnehmen eines ersten digitalen Bildes mit Markierungen (117) im Inneren des Kältegerätes (100), wobei das Kältegerät (100) eine Verarbeitungseinrichtung (107) umfasst, die ausgebildet ist, das erste digitale Bild auf Grundlage der aufgenommenen Markierungen (117) in ein zweites digitales Bild umzuformen, **dadurch gekennzeichnet, dass** die Verarbeitungseinrichtung (107) ausgebildet ist, einen Randbereich des ersten digitalen Bildes auf Grundlage der Markierungen (117) zu entfernen, um das zweite digitale Bild zu erhalten.

2. Kältegerät (100) nach Anspruch 1, **dadurch gekennzeichnet, dass** die Markierungen (117) durch Vorsprünge mit geometrischen Formen im Inneren eines Innenbehälters (103) des Kältegerätes (100) gebildet werden.

3. Kältegerät (100) nach einem der vorangehenden Ansprüche, **dadurch gekennzeichnet, dass** die Markierungen (117) durch Kanten im Inneren des Innenbehälters (103) gebildet werden.

4. Kältegerät (100) nach einem der vorangehenden Ansprüche, **dadurch gekennzeichnet, dass** die Markierungen (117) eine andere Farbe als der Innenbehälter (103) des Kältegerätes (100) aufweisen.

5. Kältegerät (100) nach einem der vorangehenden Ansprüche, **dadurch gekennzeichnet, dass** der Innenbehälter (103) des Kältegeräts (100) vier Markierungen (117) umfasst, die einen rechteckigen Bereich im Inneren des Innenbehälters (103) definieren.

6. Kältegerät (100) nach einem der vorangehenden Ansprüche, **dadurch gekennzeichnet, dass** die Markierungen (117) dreiecksförmig sind.

7. Kältegerät (100) nach einem der vorangehenden Ansprüche, **dadurch gekennzeichnet, dass** die Markierungen (117) Retroreflektoren sind.

8. Kältegerät (100) nach einem der vorangehenden Ansprüche, **dadurch gekennzeichnet, dass** das Kältegerät (100) eine Beleuchtungseinrichtung umfasst, die in der Nähe des Kameramoduls (105) angeordnet ist.

9. Kältegerät (100) nach Anspruch 8, **dadurch gekennzeichnet, dass** die Beleuchtungseinrichtung ein Blitzgerät umfasst.

10. Kältegerät (100) nach einem der vorangehenden Ansprüche, **dadurch gekennzeichnet, dass** die Verarbeitungseinrichtung (107) ausgebildet ist, eine Bildgröße des ersten digitalen Bildes auf Grundlage der Markierungen (117) zu ändern, um das zweite digitale Bild zu erhalten.

11. Kältegerät (100) nach einem der vorangehenden Ansprüche, **dadurch gekennzeichnet, dass** die Verarbeitungseinrichtung (107) ausgebildet ist, eine Bildauflösung des ersten digitalen Bildes auf Grundlage der Markierungen (117) anzupassen, um das zweite digitale Bild zu erhalten.

12. Kältegerät (100) nach einem der vorangehenden Ansprüche, **dadurch gekennzeichnet, dass** die Verarbeitungseinrichtung (107) ausgebildet ist, einen Bildausschnitt des ersten digitalen Bildes auf Grundlage der Markierungen (117) zu wählen, um das zweite digitale Bild zu erhalten.

13. Kältegerät (100) nach einem der vorangehenden Ansprüche, **dadurch gekennzeichnet, dass** die Verarbeitungseinrichtung (107) ausgebildet ist, eine Bilddrehung des ersten digitalen Bildes auf Grundlage der Markierungen (117) durchzuführen, um das zweite digitale Bild zu erhalten.

14. Kältegerät (100) nach einem der vorangehenden Ansprüche, **dadurch gekennzeichnet, dass** die Verarbeitungseinrichtung (107) ausgebildet ist, einen Trapezfilter und/oder einen Verzerrungsfilter auf Grundlage der Markierungen (117) anzuwenden.

## Claims

1. Refrigeration appliance (100) with a camera module (105) for capturing a first digital image with markings (117) in the interior of the refrigeration appliance (100), wherein the refrigeration appliance (100) includes a processing device (107), which is embodied to convert the first digital image into a second digital image on the basis of the captured markings (117), **characterised in that** the processing device (107) is embodied to remove an edge area of the first digital image on the basis of the markings (117), in order to obtain the second digital image.

2. Refrigeration appliance (100) according to claim 1, **characterised in that** the markings (117) are formed by projections with geometrical shapes inside an inner container (103) of the refrigeration appliance (100).

3. Refrigeration appliance (100) according to one of the preceding claims, **characterised in that** the markings (117) are formed by edges inside the inner container (103).

4. Refrigeration appliance (100) according to one of the preceding claims, **characterised in that** the markings (117) differ in colour from the inner container (103) of the refrigeration appliance (100).

5. Refrigeration appliance (100) according to one of the preceding claims, **characterised in that** the inner container (103) of the refrigeration appliance (100) includes four markings (117), which define a rectangular area inside the inner container (103).

6. Refrigeration appliance (100) according to one of the preceding claims, **characterised in that** the markings (117) are triangular in shape.

7. Refrigeration appliance (100) according to one of the preceding claims, **characterised in that** the markings (117) are retroreflectors.

8. Refrigeration appliance (100) according to one of the preceding claims, **characterised in that** the refrigeration appliance (100) includes an illumination device, which is disposed in the vicinity of the camera module (105).

9. Refrigeration appliance (100) according to claim 8, **characterised in that** the illumination device comprises a flash device.

10. Refrigeration appliance (100) according to one of the preceding claims, **characterised in that** the processing device (107) is embodied to change an image size of the first digital image on the basis of the markings (117), in order to obtain the second digital image.

11. Refrigeration appliance (100) according to one of the preceding claims, **characterised in that** the processing device (107) is embodied to adapt an image resolution of the first digital image on the basis of the markings (117), in order to obtain the second digital image.

12. Refrigeration appliance (100) according to one of the preceding claims, **characterised in that** the processing device (107) is embodied to select an image crop of the first digital image on the basis of the markings (117), in order to obtain the second digital image.

13. Refrigeration appliance (100) according to one of the preceding claims, **characterised in that** the processing device (107) is embodied to carry out an image rotation of the first digital image on the basis of the markings (117), in order to obtain the second digital image.

14. Refrigeration appliance (100) according to one of the preceding claims, **characterised in that** the processing device (107) is embodied to apply a trapezoidal filter and/or a distortion filter on the basis of the markings (117).

## Revendications

1. Appareil frigorifique (100) comprenant un module de caméra (105) permettant de capturer une première image numérique qui comprend des repères (117) à l'intérieur de l'appareil frigorifique (100), dans lequel l'appareil frigorifique (100) comprend un dispositif de traitement (107) conçu pour transformer la première image numérique en une seconde image numérique sur la base des repères (117) capturés,
**caractérisé en ce que** le dispositif de traitement (107) est configuré pour supprimer une région de bordure de la première image numérique sur la base des repères (117), afin d'obtenir la seconde image numérique.

2. Appareil frigorifique (100) selon la revendication 1, **caractérisé en ce que** les repères (117) sont formés par des protubérances dotées de formes géométriques à l'intérieur de la cuve intérieure (103) de l'appareil frigorifique (100).

3. Appareil frigorifique (100) selon l'une des revendications précédentes, **caractérisé en ce que** les repères (117) sont formés par des bords à l'intérieur de la cuve intérieure (103).

4. Appareil frigorifique (100) selon l'une des revendications précédentes, **caractérisé en ce que** les repères (117) ont une autre couleur que la cuve intérieure (103) de l'appareil frigorifique (100).

5. Appareil frigorifique (100) selon l'une des revendications précédentes, **caractérisé en ce que** la cuve intérieure (103) de l'appareil frigorifique (100) comprend quatre repères (117) qui définissent une zone rectangulaire à l'intérieur de la cuve intérieure (103).

6. Appareil frigorifique (100) selon l'une des revendications précédentes, **caractérisé en ce que** les repères (117) sont de forme triangulaire.

7. Appareil frigorifique (100) selon l'une des revendications précédentes, **caractérisé en ce que** les repères (117) sont des dispositifs rétroréfléchissants.

8. Appareil frigorifique (100) selon l'une des revendications précédentes, **caractérisé en ce que** l'appareil frigorifique (100) comprend un dispositif d'éclairage qui est disposé à proximité du module de caméra (105).

9. Appareil frigorifique (100) selon la revendication 8, **caractérisé en ce que** le dispositif d'éclairage comprend un flash.

10. Appareil frigorifique (100) selon l'une des revendications précédentes, **caractérisé en ce que** le dispositif de traitement (107) est conçu pour modifier une taille d'image de la première image numérique sur la base des repères (117), afin d'obtenir la seconde image numérique.

11. Appareil frigorifique (100) selon l'une des revendications précédentes, **caractérisé en ce que** le dispositif de traitement (107) est conçu pour ajuster une résolution d'image de la première image numérique sur la base des repères (117), afin d'obtenir la seconde image numérique.

12. Appareil frigorifique (100) selon l'une des revendications précédentes, **caractérisé en ce que** le dispositif de traitement (107) est conçu pour sélectionner une section d'image de la première image numérique sur la base des repères (117), afin d'obtenir la seconde image numérique.

13. Appareil frigorifique (100) selon l'une des revendications précédentes, **caractérisé en ce que** le dispositif de traitement (107) est conçu pour exécuter une rotation d'image de la première image numérique sur la base des repères (117), afin d'obtenir la seconde image numérique.

14. Appareil frigorifique (100) selon l'une des revendications précédentes, **caractérisé en ce que** le dispositif de traitement (107) est conçu pour utiliser un filtre à trapèze et/ou un filtre de distorsion sur la base des repères (117).
